Europäisches Patentamt

European Patent Office

Office européen des brevets

(19)

(11) **EP 0 695 888 B1**

(12) **FASCICULE DE BREVET EUROPEEN**

| | |
|---|---|
| (45) Date de publication et mention de la délivrance du brevet: **05.08.1998 Bulletin 1998/32** | (51) Int Cl.$^6$: **F16F 15/02** |

(21) Numéro de dépôt: **95401810.7**

(22) Date de dépôt: **01.08.1995**

(54) **Procédé et dispositif pour éviter les vibrations d'un arbre de grande longueur**

Verfahren und Vorrichtung zur Vermeidung von Schwingungen in Walzen grosser Länge

Method and device for avoiding vibrations in long shafts

(84) Etats contractants désignés:
**AT DE ES GB IT NL**

(30) Priorité: **03.08.1994 FR 9409647**

(43) Date de publication de la demande:
**07.02.1996 Bulletin 1996/06**

(73) Titulaire: **Patin, Pierre**
**F-75005 Paris (FR)**

(72) Inventeur: **Patin, Pierre**
**F-75005 Paris (FR)**

(74) Mandataire: **Phélip, Bruno et al**
**c/o Cabinet Harlé & Phélip**
**21, rue de La Rochefoucauld**
**75009 Paris (FR)**

(56) Documents cités:
**FR-A- 2 359 327        GB-A- 870 781**
**GB-A- 1 547 721**

## Description

L'invention a pour objet un procédé et un dispositif pour éviter les vibrations d'un arbre ayant une grande longueur par rapport à son diamètre et entraîné en rotation, à grande vitesse, autour de son axe.

L'invention s'applique spécialement aux cas où un arbre doit être entièrement libre de tout appui sur un secteur de sa périphérie comme, par exemple, dans le cas d'un tapis transporteur reposant sur une série de rouleaux parallèles.

D'une façon générale, un arbre rotatif est normalement maintenu à ses deux extrémités par deux organes de centrage tels que des roulements, des coussinets ou autres types de palier de centrage, qui définissent un axe théorique rectiligne s'étendant entre les centres des deux paliers.

En pratique, il est très difficile de faire coïncider rigoureusement et en permanence le centre de gravité d'un arbre avec un point de son axe géométrique. Il en résulte, lorsque l'arbre est entraîné en rotation à grande vitesse, qu'il est soumis à une force centrifuge dont la direction tourne autour de l'axe à la vitesse de rotation et qui engendre des vibrations.

Cet effet est particulièrement sensible pour les arbres de grande longueur, c'est-à-dire, en pratique, pour les pièces ou éléments de pièces cylindriques dont la longueur entre appuis est supérieure à vingt fois le diamètre.

C'est le cas, en particulier, des tapis roulants utilisés pour le transport de personnes ou de marchandises et supportés par des rouleaux dont le diamètre, pour diverses raisons, doit être assez réduit et qui, de ce fait, tournent à grande vitesse.

Pour éviter les effets de telles vibrations, il est d'usage courant, par exemple, pour l'usinage d'un arbre de grande longueur sur un tour, de placer en un ou plusieurs points de la portée entre pointes, un dispositif appelé lunette, qui a pour objet de maintenir rectiligne l'axe géométrique de la pièce entre pointes et est constitué de galets qui exercent sur la pièce en rotation des réactions concourantes sur son axe, dont la résultante est normalement égale et opposée au poids de l'arbre, et qui maintiennent celui-ci suivant une direction rectiligne dans l'axe des pièces tournantes du tour. Généralement, la lunette comporte trois galets disposés à 120°, l'un des trois étant placé au-dessus de la pièce et à la verticale de son axe.

Une autre solution consiste à placer, en un ou plusieurs points de l'arbre, des dispositifs amortisseurs qui entourent l'arbre et peuvent être reliés, par ressorts ou par vérins hydrauliques ou pneumatiques, à une masse flottante ou à un appui fixe.

Cependant, comme on l'a indiqué, de telles solutions ne sont pas applicables dans tous les cas.

En particulier, dans les transporteurs à rouleaux, il est possible de disposer des galets porteurs ou des coussinets à la partie inférieure des rouleaux mais non au-dessus de ces rouleaux dont la partie supérieure doit rester entièrement libre sur un secteur pour supporter un tapis de transport ou bien, directement, les personnes ou les marchandises transportées.

Généralement, on utilise dans ce cas des rouleaux de diamètre assez important par rapport à leur longueur, qui sont donc appliqués par leur propre poids sur les galets porteurs. Il en résulte, cependant, que ces rouleaux doivent être relativement écartés les uns des autres.

Or, dans le cas, par exemple, de tapis roulants pour le transport de personnes, un trop grand écartement des rouleaux n'est pas admissible et, à moins de réduire exagérément la largeur du tapis, on est amené à utiliser des rouleaux d'assez faible diamètre par rapport à leur longueur.

On observe alors que l'arbre peut être soumis, à partir d'une vitesse critique de rotation, à une vibration naturellement indésirable, car génératrice de bruits et de phénomènes de résonance, et dont l'amplitude peut être assez importante pour aller jusqu'à la rupture.

L'invention a pour objet de remédier à ces inconvénients grâce à un procédé et un dispositif permettant d'éviter les vibrations d'un arbre de grande longueur, même pour de très grandes vitesses de rotation.

L'invention s'applique au procédé selon le préambule de la revendication 1 et au dispositif selon le préambule de la revendication 4. Un tel procédé et un tel dispositif sont connus du document GB-A-870 781. Le procédé selon l'invention est défini par la revendication 1 et le dispositif de l'invention est défini par la revendication 4.

De façon particulièrement avantageuse, la position des organes d'appui du support intermédiaire est réglée de façon que la déformation de l'arbre détermine une force de rappel élastique vers des organes d'appui supérieure aux efforts d'excentrement vers l'extérieur résultant de la force centrifuge.

De façon avantageuse, on peut utiliser deux moyens de support intermédiaires, écartés l'un de l'autre et placés respectivement à égale distance des deux organes de centrage des extrémités de l'arbre.

Une telle disposition permet d'augmenter considérablement la vitesse critique.

L'invention couvre également d'autres caractéristiques avantageuses qui font l'objet des sous-revendications.

La description qui suit fera bien comprendre le principe de l'invention.

La Figure 1 représente la déformation d'un arbre de grande longueur en rotation entre deux coussinets ou roulements porteurs.

La Figure 2 montre les résultats obtenus à l'aide d'un dispositif de centrage de type connu.

La Figure 3 montre schématiquement la trajectoire d'un point de l'axe d'un arbre soumis à des vibrations.

La Figure 4 est une vue en long schématique d'un arbre équipé du dispositif selon l'invention.

La Figure 5 montre des coupes de la Figure 4 au droit des différents appuis.

La Figure 6 montre le mode d'action des forces en présence.

La Figure 7 est une vue en coupe longitudinale du dispositif de précontrainte selon l'invention, dans un mode de réalisation perfectionné.

La Figure 8 est une vue en coupe transversale du dispositif de la Figure 7.

La figure 9 montre un autre mode de réalisation d'un support intermédiaire.

La figure 10 montre schématiquement, en vue de dessus avec coupes partielles, l'application de l'invention à un transporteur à rouleaux.

La figure 11 est une vue en coupe axiale selon la ligne AA de la figure 10.

La figure 12 est une vue en coupe transversale selon la ligne BB de la figure 10.

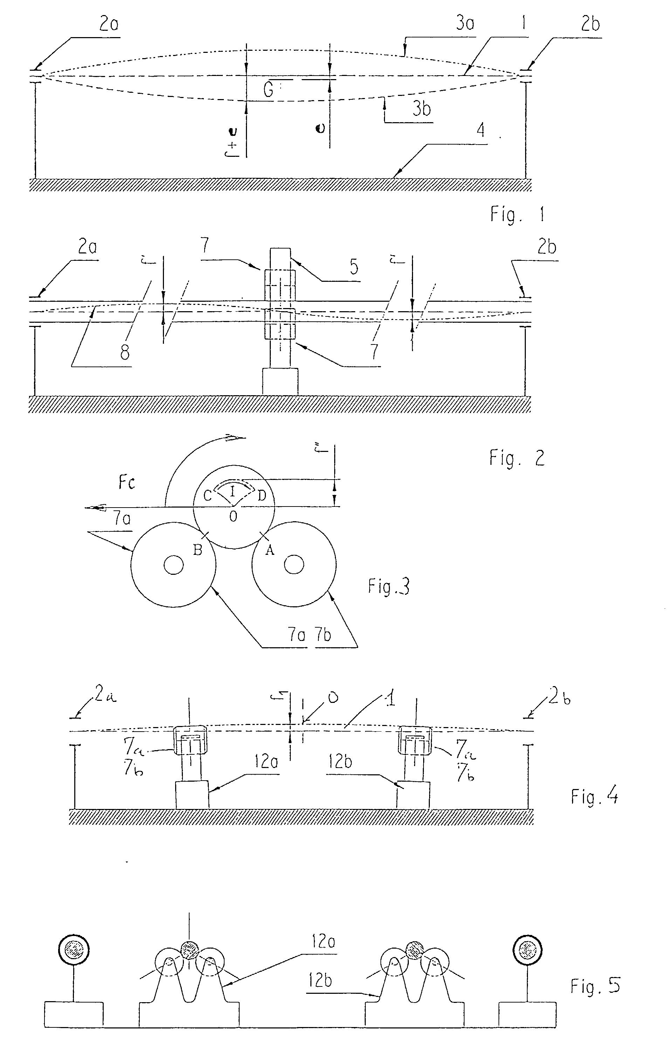

Sur la Figure 1, un arbre représenté par son axe théorique 1 tourne sur deux roulements ou coussinets 2a et 2b portés par une structure rigide 4. Le centre de gravité G est, au repos, sans tenir compte du poids, à une distance e de l'axe théorique. Au cours de la rotation, la force centrifuge provoque la déformation de l'axe qui prend une flèche f et la déformée est comprise dans un volume fuselé dont les traces sur le plan vertical sont deux courbes 3a et 3b.

L'intervention du poids déplace vers le bas l'ensemble de ces déformées.

Cependant, un phénomène de résonance peut intervenir lorsque la force centrifuge devient supérieure à la force élastique de rappel due à la déformation de la fibre moyenne, le poids de l'arbre qui agit alternativement dans le même sens que la force centrifuge et en sens opposé (pour les mouvements verticaux), n'intervenant pas sur l'amplitude de la vibration.

Pour un arbre de longueur libre 1 et de masse m = P/g, la force centrifuge $F_c$ est liée à la vitesse angulaire $\omega$ (en radians/seconde), si l'excentrement du centre de gravité est e:

$$F_c = m\omega^2 \, e.$$

Cette force tend à donner à l'arbre une flèche f qui s'ajoute à e et la force centrifuge devient :

$$F_c = P\omega^2(f+e)/g.$$

La déformation élastique de l'arbre entre appuis simples sous un effort F est une flèche f' donnée par la formule :

$$f' = Fl^3/48 \, EI$$

et réciproquement la force de rappel élastique due à une flèche f' est :

$$48 \, EI \, f'/l^3$$

Si la force centrifuge, à une vitesse donnée, dépasse la force de rappel élastique, c'est-à-dire si :

$$\frac{P}{g} \, \omega^2 \, (e + f) > \frac{48 \, EI}{l^3} \, f'$$

la valeur de (e + f) dépassera f' et le phénomène ira en s'amplifiant, induisant des vibrations de grande amplitude pouvant aller jusqu'à la rupture. La vitesse critique correspond à f' = f + e ou :

$$\omega^2 = \frac{48 \, EI}{P \, l^3} \, g \qquad \omega = 6,93 \sqrt{\frac{EI}{P \, l^3}} \, g$$

Cette vitesse critique correspond d'ailleurs au premier mode de fréquence de vibration critique de l'arbre.

Si l'on utilise une lunette de centrage 5, comme on l'a indiqué sur la Figure 2, la flèche f' prise par la déformée 8 sur chaque tronçon d'arbre libre, entre le palier de centrage 2a, 2b et la lunette intermédiaire 5, est extrêmement réduite.

Dans le cas, cependant, où l'on ne peut supporter l'arbre que par en-dessous, en cherchant seulement à la maintenir rectiligne, une analyse des déformations de l'arbre montre que la partie centrale de celui-ci se met à vibrer, à grande vitesse, de la façon schématisée sur la Figure 3 où l'on a représenté la trajectoire d'un point I de l'axe soumis à une force centrifuge $F_c$ qui tourne à la vitesse de rotation de l'arbre et prenant appui, dans sa partie centrale, sur deux galets écartés 7a, 7b.

Cette trajectoire se décompose de la façon suivante :

1) Tant que la force centrifuge $F_c$ est dirigée vers le bas et comprise entre les rayons OA et OB, le point I reste immobile.

2) $F_c$ étant comprise entre OB et OC, l'arc BC dépendant de $F_c$, c'est-à-dire de la vitesse de rotation, I décrit un arc de cercle OC en s'appuyant sur le galet 7a.

3) Lorsque la valeur de $F_c$ et la réaction élastique de déformation de l'arbre sont égales et opposées, I décrit un arc de cercle CD centré sur O et de rayon f''.

4) Quand I arrive en D symétrique de C par rapport au plan vertical passant par O, l'arbre vient heurter le galet 7b, puis décrit un arc de cercle DO symétrique de OC.

En certains points O, C, D, de la trajectoire, les valeurs et les directions des vitesses varient brusquement et la trajectoire réelle peut être un peu différente.

De plus, le choc au passage de I par le point D peut être générateur de phénomènes secondaires.

Il est possible, cependant, d'analyser le mouvement de l'axe et, par exemple, de décomposer le déplacement du point I en série de Fourier comportant une fréquence de base correspondant à la vitesse de rotation et un certain nombre d'harmoniques.

L'idée de l'invention est de supprimer les vibrations et tous les mouvements parasites en exerçant une précontrainte de bas en haut sur l'arbre en rotation pour lui donner une déformée permanente convexe vers le haut telle que cette précontrainte applique en permanence l'arbre sur un moyeu du support intermédiaire 12 muni de galets 7.

La déformée ainsi imposée à l'arbre est choisie pour que, quelle que soit la vitesse de rotation $N = 60 \, \omega/2 \, \pi$ (tours/minute) de l'arbre et l'excentrement e du centre de gravité, la force élastique de maintien due à la déformation soit toujours largement supérieure à la force centrifuge, sans entraîner dans l'arbre des contraintes alternées supérieures à celles définies par les lois de Wöhler.

Autrement dit, au lieu de chercher, comme on le fait en général dans l'état de la technique, à maintenir rectiligne l'axe de l'arbre en rotation, on le déforme de manière telle que sa déformation élastique le maintienne en contact permanent avec les galets porteurs 7, supprimant ainsi les vibrations.

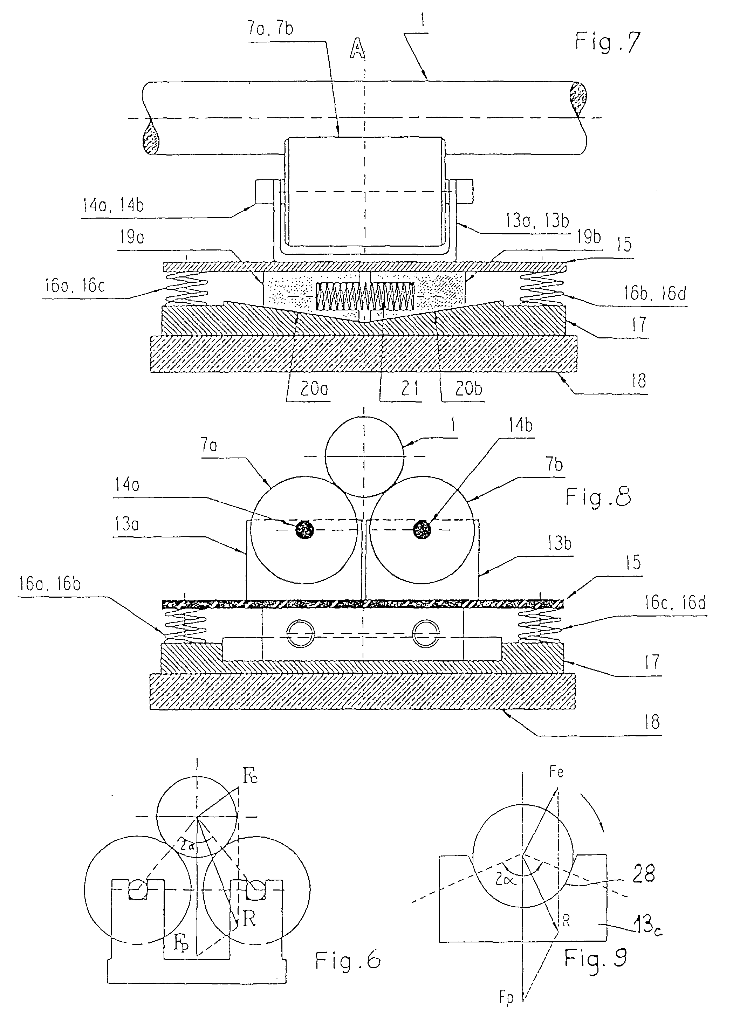

Les Figures 4 et 5 montrent schématiquement un dispositif pour la mise en oeuvre du procédé selon l'invention.

La Figure 4 montre la déformée de l'axe de l'arbre 1 par l'utilisation de deux ensembles d'appui 12a, 12b, comportant chacun deux galets et supportant l'arbre 1 en lui appliquant des forces telles qu'au repos l'arbre prend une flèche $f_1$. La Figure 5 montre les coupes de la Figure 4 au droit des appuis correspondants.

La Figure 6 montre comment doit être calculée la force de précontrainte $F_p$ pour que l'arbre porté ne décolle pas des galets : il faut que la résultante R des forces $F_c$ et $F_p$ reste à l'intérieur de l'angle 2 $\alpha$ déterminé par les trois axes de l'arbre et des galets. On voit que la force de précontrainte doit être d'autant plus grande par rapport à $F_c$ que les axes des galets sont plus rapprochés.

Naturellement, les forces qui provoquent les vibrations ne sont pas annulées, mais ramenées à une valeur constante liée au seul excentrement du centre de gravité et, au lieu d'être appliquées seulement à l'arbre, relativement léger, elles sont transmises par les galets et les roulements ou coussinets à l'ensemble de la structure porteuse avec la possibilité d'interposer en plusieurs points des éléments amortisseurs.

Les forces de précontrainte sont appliquées par un ensemble de ressorts complétés par un dispositif de rattrapage de jeu qui bloque tout mouvement parasite.

Les Figures 7 et 8 montrent une réalisation pratique du dispositif d'appui pour la mise en précontrainte de l'arbre. La Figure 7 est une vue en élévation et la Figure 8 une coupe par le plan AA de la Figure 7.

L'arbre 1 repose sur l'ensemble d'appui 12 par l'intermédiaire de deux galets 7a, 7b, dont les axes 14a, 14b, sont portés par des pièces 13a, 13b, en forme de U. Ces pièces s'appuient sur une plaque 15 qui est poussée vers le haut par quatre ressorts 16a, 16b, 16c, 16d, disposés aux quatre angles et s'appuyant eux-mêmes sur une plaque 17 qui repose sur une structure non représentée par l'intermédiaire d'un élément amortisseur 18.

Les ressorts 16a, 16b, 16c, 16d, exercent une force dirigée vers le haut qui est stabilisée par un dispositif de rattrapage de jeu constitué par deux coins 19a, 19b, qui s'appuient sur deux plans inclinés 20a, 20b, de la plaque 17 et sont écartés par des ressorts 21. Ce dispositif de rattrapage de jeu a pour but de maintenir constante la force appliquée par les ressorts : tout décollement de l'arbre de ses galets porteurs se traduit par un soulèvement de la plaque 15, soulèvement qui est immédiatement rattrapé par le jeu des coins et évite la mise en vibration des ressorts.

Bien entendu, l'invention ne se limite pas aux détails du mode de réalisation qui vient d'être décrit à titre d'exemple, des dispositions analogues pouvant être utilisées sans s'écarter du cadre de protection défini par les revendications.

Par exemple, les galets de roulement constituant les supports intermédiaires pourraient être remplacés par d'autres moyens d'appui tournant, par exemple à palier lisse. La figure 9 montre ainsi un support 13c sur lequel est ménagée une face d'appui concave munie d'un demi-coussinet 28 qui enveloppe la partie inférieure de l'arbre 1 sur un secteur angulaire de l'ordre de 120° ou moins.

D'autre part, si l'invention s'applique spécialement à la réalisation de tapis transporteurs prenant appui sur des rouleaux parallèles, elle est particulièrement avantageuse dans les cas où le tapis doit être supprimé, les personnes ou marchandises transportées prenant alors appui directement sur les rouleaux.

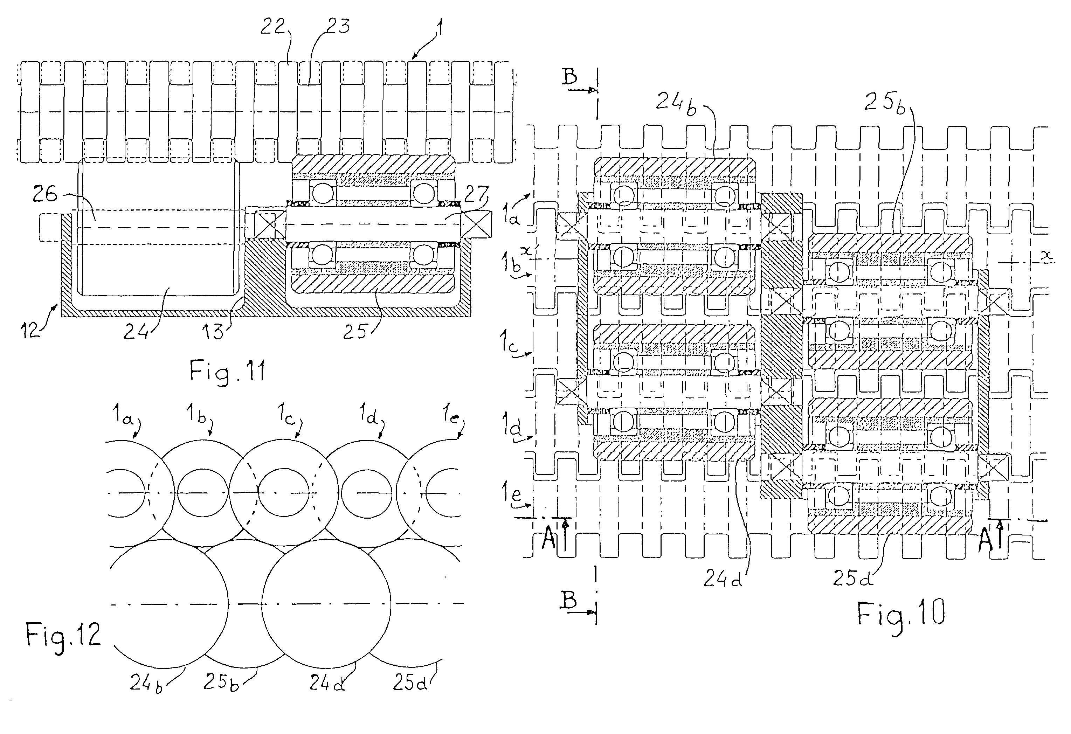

C'est le cas notamment des transporteurs à vitesse variable. Les rouleaux doivent alors être très rapprochés pour définir une surface d'appui sensiblement continue pour les pieds des personnes transportées et il est avantageux d'utiliser des rouleaux rainurés imbriqués, comme on l'a représenté schématiquement sur la figure 10 qui est une vue de dessus avec coupes partielles, la figure 11 étant une vue en coupe axiale.

Chaque rouleau 1 est rainuré de façon à ménager des disques espacés 22 montés sur un arbre central 23 de faible diamètre et deux rouleaux successifs 1a, 1b sont décalés axialement de façon que les disques d'un rouleau s'imbriquent dans les rainures des rouleaux adjacents, ce qui permet d'assurer un bon portage des pieds des passagers. Les axes des rouleaux étant ainsi très rapprochés, les galets d'appui des moyens de support intermédiaires doivent être également décalés, de la façon indiquée sur les figures 10 et 11.

Selon l'invention, chaque rouleau 1 prend appui dans sa partie centrale sur un ou deux moyens de support intermédiaires 13 comprenant chacun une paire de galets 24, 25 sur lesquels roulent les disques 22 du rouleau 1.

Cependant, les deux galets 24, 25 de chaque paire sont décalés longitudinalement et transversalement, de la façon indiquée sur les figures 10 et 11.

De plus, les axes 26, 27 des galets 24, 25 sont placés dans les plans médians entre les rouleaux 1 et leurs diamètres sont déterminés de telle sorte que chaque galet soit au contact de deux rouleaux adjacents.

On voit ainsi sur les figures 10 et 12 que le rouleau 1b prend appui sur les galets 24b, 25b, qui, d'autre part, sont au contact, respectivement, des deux rouleaux adjacents 1a et 1c.

D'autre part, le rouleau 1d prend appui sur une paire de galets 24d, 25d qui sont disposés de la même façon que les galets 24b, 25b, et peuvent ainsi s'imbriquer avec ces derniers, comme indiqué sur la figure 10 et qui, en outre, sont au contact, respectivement, des rouleaux 1c et 1e placés respectivement de part et d'autre du rouleau 1d.

Le rouleau 1c prend donc appui sur les galets 25b et 24d de deux paires différentes associées respectivement aux rouleaux voisins 1b et 1d et il en est de même du rouleau 1e.

Bien entendu, chaque support intermédiaire 13 d'une paire de galets 24, 25 est associée, selon l'invention, à un moyen de réglage de la hauteur des galets, qui peut être du type représenté sur la figure 7 et n'a pas été représenté sur la figure 11.

Grâce à cette disposition particulière, il est possible de resserrer suffisamment les rouleaux parallèles pour définir une surface d'appui sensiblement continue, tout en associant à chaque rouleau un support intermédiaire de hauteur réglable permettant d'éviter les vibrations malgré le faible diamètre de l'arbre central 23 de chaque rouleau.

Les signes de référence insérés après les caractéristiques techniques mentionnées dans les revendications ont pour seul but de faciliter la compréhension de ces dernières et n'en limitent aucunement la portée.

## Revendications

1. Procédé pour éviter les vibrations d'un arbre (1) entraîné en rotation autour de son axe et ayant une grande longueur par rapport à son diamètre, ledit arbre (1) étant maintenu avec possibilité de rotation, à ses deux extrémités par des organes de centrage fixes (2a, 2b) et, dans sa partie centrale, par au moins un moyen intermédiaire (12) de support tournant,

   caractérisé par le fait que le moyen de support intermédiaire (12) est placé sur un côté de l'arbre (1) et que sa position par rapport aux organes de centrage d'extrémité (2a, 2b) est réglée de façon que, dans sa partie centrale, le centre (O) de l'arbre (1) soit écarté de la ligne passant par les centres des organes de centrage d'extrémité (2a, 2b), du côté opposé audit support intermédiaire (12), l'arbre (1) étant ainsi soumis à une déformation permanente et maintenu appliqué sur ledit support intermédiaire (12) par une force de rappel élastique.

2. Procédé selon la revendication 1, caractérisé par le fait que le support intermédiaire (12) est muni d'au moins un organe d'appui tournant (7) de l'arbre (1), s'étendant sur un secteur inférieur à un tour du côté dudit support (12), de façon à laisser un secteur libre du côté opposé, pour le contact avec un organe extérieur.

3. Procédé selon la revendication 2, dans lequel l'arbre est entraîné en rotation à une vitesse susceptible de déterminer la déformation de l'arbre par effet centrifuge, caractérisé par le fait que la position du support intermédiaire (12) est réglée de façon que la déformation de l'arbre (1) détermine une force de rappel élastique vers le support intermédiaire (12), supérieure aux efforts d'excentrement vers l'extérieur résultant de la force centrifuge.

4. Dispositif de support d'un arbre (1) entraîné en rotation autour de son axe, comprenant deux organes de centrage (2a, 2b), respectivement des deux extrémités de l'arbre (1), entre lesquels est disposé au moins un moyen de support intermédiaire (12) pour le maintien de la partie centrale de l'arbre (1),

   caractérisé par le fait que le moyen de support intermédiaire (12) est muni d'au moins un organe (7) d'appui d'au moins un secteur de l'arbre avec possibilité de rotation et est associé à des moyens (17, 19) de réglage de la position dudit organe d'appui (7) par rapport à un axe théorique passant par les centres des deux organes de centrage d'extrémités (2a, 2b), ladite position étant réglée de façon que, dans sa partie centrale, le centre de gravité (O) de l'arbre (1) soit écarté de l'axe théorique, du côté opposé audit organe d'appui intermédiaire (7), l'arbre étant ainsi soumis à une déformation permanente et maintenu appliqué sur ledit organe d'appui (7) par une force de rappel élastique.

5. Dispositif de support selon la revendication 4, caractérisé par le fait que le moyen de support intermédiaire (11) est muni d'au moins deux organes d'appui tournant tels que des galets de roulement (7a, 7b).

6. Dispositif de support selon la revendication 4, caractérisé par le fait que le moyen de support intermédiaire (12) est muni d'un organe d'appui tournant constitué d'une partie lisse cylindrique formant coussinet (28) couvrant un secteur angulaire d'au plus 180°.

7. Dispositif de support selon l'une des revendications 5 et 6, caractérisé par le fait que, l'arbre (1) étant sensiblement horizontal, les organes d'appui roulant (7a, 7b) de chaque moyen de support intermédiaire (12a, 12b) sont disposés symétriquement par rapport à un plan vertical passant par l'axe théorique de l'arbre, et que la position desdits organes d'appui (7a, 7b) est réglée en tenant compte du poids de l'arbre (1), de façon à ce que la pression d'application sur lesdits organes d'appui (7a, 7b), qui résulte de la flèche (11) donnée à l'axe de l'arbre (1) dans le sens opposé, soit supérieure aux effets de la force centrifuge.

8. Dispositif de support selon l'une des revendications 4 à 7, caractérisé par le fait qu'il comprend deux moyens de support intermédiaire (12a, 12b), écartés l'un de l'autre et placés respectivement à égale distance des deux organes de centrage (2a, 2b) des extrémités de l'arbre (1).

9. Dispositif de support selon l'une des revendications 4 à 8, caractérisé par le fait qu'il est appliqué à un transporteur à rouleaux parallèles resserrés de façon à ménager une surface d'appui sensiblement continue.

10. Dispositif de support selon la revendication 9, caractérisé par le fait que chaque support intermédiaire (12) comprend une pièce de support (13) de hauteur réglable portant deux galets de roulement (24, 25) montés rotatifs autour d'axes (26, 27) parallèles à l'axe du rouleau correspondant (1) et qui sont décalés longitudinalement et transversalement de façon que les galets de deux supports voisins s'imbriquent les uns dans les autres.

11. Dispositif de support selon la revendication 10, caractérisé par le fait qu'un rouleau (1) sur deux est associé à au moins un support intermédiaire (12) portant deux galets (24, 25) décalés symétriquement de part et d'autre de l'axe du rouleau associé (1b) et que les axes (26b, 27b) desdits galets (24b, 25b) sont placés dans les plans médians verticaux entre ledit rouleau (1b) et les rouleaux adjacents (1a, 1c) de telle sorte que chaque galet (24b) (25b) prenne appui simultanément sur le rouleau associé (1b) et sur le rouleau adjacent (1a) (1c) placé du même côté.

**Patentansprüche**

1. Verfahren zum Vermeiden der Vibrationen einer Welle (1), die um ihre Achse drehangetrieben wird und in bezug auf ihren Durchmesser eine große Länge besitzt, wobei die Welle (1) mit der Möglichkeit der Rotation an ihren beiden Enden von festen Zentrierorganen (2a, 2b) und in ihrem Mittelteil von wenigstens einem sich drehenden Zwischenträgermittel (12) gehalten wird, dadurch gekennzeichnet, daß das Zwischenträgermittel (12) auf einer Seite der Welle (1) vorgesehen ist und seine Position in bezug auf die Endzentrierorgane (2a, 2b) so reguliert wird, daß das Zentrum (O) der Welle (1) in ihrem Mittelteil von der Linie, die durch die Zentren der Endzentriermittel (2a, 2b) verläuft, zu der dem Zwischenträgermittel (12) gegenüberliegenden Seite entfernt ist, wodurch die Welle (1) so einer permanenten Verformung unterworfen und von einer elastischen Rückstellkraft auf dem Zwischenträgermittel (12) aufgelegt gehalten wird.

2. Verfahren nach Anspruch 1, dadurch gekennzeichnet, daß das Zwischenträgermittel (12) mit wenigstens einem sich drehenden Stützorgan (7) für die Welle versehen ist, das sich auf einem Sektor, der kleiner als ein Umlauf ist, zur Seite des Trägermittels (12) so erstreckt, daß zur entgegengesetzten Seite ein Sektor für den Kontakt mit einem äußeren Organ freigelassen wird.

3. Verfahren nach Anspruch 2, bei dem die Welle mit einer Drehzahl angetrieben wird, die geeignet ist, die Verformung der Welle durch Fliehkraftwirkung zu bestimmen, dadurch gekennzeichnet, daß die Position des Zwischenträgermittels (12) so reguliert wird, daß die Verformung der Welle (1) eine elastische Rückstellkraft zum Zwischenträgermittel (12) hin bestimmt, die größer als die aus der Fliehkraft resultierenden, nach außen wirkenden Dezentrierbelastungen ist.

4. Trägervorrichtung für eine um ihre Achse drehantreibbare Welle (1), die zwei Zentrierorgane (2a, 2b), jeweils an den beiden Enden der Welle (1), umfaßt, zwischen denen wenigstens ein Zwischenträgermittel (12) zum Halten des Mittelteils der Welle (1) angeordnet ist, dadurch gekennzeichnet, daß das Zwischenträgermittel (12) mit wenigstens einem Stützorgan (7) für wenigstens einen Sektor der Welle mit Rotationsmöglichkeit versehen und mit Mitteln (17, 19) zur Regulierung der Position des Stützorgans (7) in bezug auf eine theoretische Achse, die durch die Zentren der beiden Endzentrierorgane (2a, 2b) verläuft, wobei die Position so geregelt wird, daß der Schwerpunkt (O) der Welle (1) in ihrem Mittelteil von der theoretischen Achse zu der dem Zwischenstützorgan (7) entgegengesetzten Seite hin entfernt ist, wodurch die Welle so einer permanenten Verformung unterworfen und von einer elastischen Rückstellkraft auf das Stützorgan (7) aufgelegt gehalten wird.

5. Trägervorrichtung nach Anspruch 4, dadurch gekennzeichnet, daß das Zwischenträgermittel (11) mit wenigstens zwei Stützorganen versehen ist, die sich wie Laufrollen (7a, 7b) drehen.

6. Trägervorrichtung nach Anspruch 4, dadurch gekennzeichnet, daß das Zwischenträgermittel (12) mit einem sich drehenden Stützorgan versehen ist, das aus einem glatten, zylindrischen Teil besteht, das ein Lager (28) bildet, das einen Winkelsektor von höchstens 180° abdeckt.

7. Trägervorrichtung nach einem der Ansprüche 5 und 6, dadurch gekennzeichnet, daß die Welle (1) im wesentlichen horizontal ist, daß die rollenden Stützorgane (7a, 7b) jedes Zwischenträgermittels (12a, 12b) in bezug auf eine vertikale Ebene, die durch die theoretische Achse der Welle verläuft, symmetrisch angeordnet sind und daß die Position der Stützorgane (7a, 7b) unter Berücksichtigung des Gewichts der Welle (1) so reguliert wird, daß der Auflagedruck auf die Stützorgane (7a, 7b), der aus der auf die Achse der Welle (1) in entgegengesetzter Richtung gegebenen Durchbiegung (11) resultiert, höher als die Wirkungen der Fliehkraft ist.

8. Trägervorrichtung nach einem der Ansprüche 4 bis 7, dadurch gekennzeichnet, daß sie zwei Zwischenträgermittel (12a, 12b) umfaßt, die voneinander beabstandet und jeweils mit gleichem Abstand von den beiden Zentrierorganen (2a, 2b) an den Enden der Welle (1) angeordnet sind.

9. Trägervorrichtung nach einem der Ansprüche 4 bis 8, dadurch gekennzeichnet, daß sie bei einem Förderer mit parallelen Rollen angewendet wird, die so eng stehen, daß eine im wesentlichen kontinuierliche Stützfläche geschaffen ist.

10. Trägervorrichtung nach Anspruch 9, dadurch gekennzeichnet, daß jedes Zwischenträgermittel (12) ein Trägerteil (13) mit verstellbarer Höhe umfaßt, das zwei Laufrollen (24, 25) trägt, die um Achsen (26, 27) drehbar angebracht sind, die zur Achse der entsprechenden Rolle (1) parallel sind und die in Längsrichtung und in Querrichtung derart versetzt sind, daß sich die Rollen der beiden benachbarten Träger einander überlappen.

11. Trägervorrichtung nach Anspruch 10, dadurch gekennzeichnet, daß jeder zweiten Rolle (1) wenigstens ein Zwischenträgermittel (12) zugeordnet ist, das zwei Rollen (24, 25) trägt, die beiderseits der Achse der zugehörigen Rolle (1b) symmetrisch versetzt sind, und daß die Achsen (26b, 27b) der Rollen (24b, 25b) in den vertikalen Mittelebenen zwischen der Rolle (1b) und den benachbarten Rollen (1a, 1c) derart angeordnet sind, daß jede Rolle (24b) (25b) gleichzeitig an der zugehörigen Rolle (1b) und der benachbarten Rolle (1a) (1c), die sich auf derselben Seite befindet, zur Anlage kommt.

## Claims

1. A process to eliminate the vibrations of a shaft (1) driven into rotation round its axis and whose length is greater than its diameter, whereby the said shaft (1) is maintained with the possibility to rotate, at both its ends by fixed centring devices (2a, 2b) and, in its centre part, by at least one revolving intermediate supporting means (12),

   characterised in that the intermediate supporting means (12) is placed on one side of the shaft (1) and that its position with respect to the end centring devices (2a, 2b) is adjusted so that, in its centre part, the centre (O) of the shaft (1) is away from the line running through the centres of the end centring devices (2a, 2b), on the side opposite the said intermediate support (12), whereas the shaft (1) is thus subjected to a permanent deformation and maintained applied to the said intermediate support (12) by an elastic recall force.

2. A process according to claim 1, characterised in that the intermediate support (12) is fitted with at least one revolving bearing device (7) of the shaft (1), extending on the side of the said support (12) on one lower sector which is below one revolution so that a sector is left free on the opposite side, for making contact with an external device.

3. A process according to claim 2, in which the shaft is driven into rotation at a speed liable to determine the deformation of the shaft by a centrifugal effect, characterised in that the position of the intermediate support (12) is adjusted so that the deformation of the shaft (1) determines an elastic recall force towards the intermediate shaft (12), greater than the offset forces to the outside, resulting from the centrifugal force.

4. A device for supporting a shaft (1) driven into rotation round its axis, comprising two centring devices (2a, 2b), respectively of both ends of the shaft (1), between which is provided at least one intermediate supporting means (12) to retain the centre part of the shaft (1),

   characterised in that the intermediate supporting means (12) is fitted with at least one bearing device (7) of at least one sector of the shaft with a possibility of rotation and is associated with adjustment means (17, 19) of the position of the said bearing device (7) with respect to a theoretical axis running the centres of both end centring devices (2a, 2b), the said position being adjusted so that in its centre part, the centre of gravity (O) of the shaft (1) is pulled away from the theoretical axis, on the side opposite the said intermediate bearing device (7), whereas the shaft is thus subjected to a permanent deformation and maintained applied to the said bearing device (7) by an elastic recall force.

5. A supporting device according to claim 4, characterised in that the intermediate supporting means (11) is fitted with at least two revolving bearing devices such as bearing rollers (7a, 7b).

6. A supporting device according to claim 4, characterised in that the intermediate supporting means (12) is fitted with a revolving bearing device comprising a cylindrical smooth section forming a bush (28) covering an angular sector of max. 180°.

7. A supporting device according to one the claims 5 and 6, characterised in that, the shaft (1) being more or less horizontal, the running bearing devices (7a, 7b) of each intermediate supporting means (12a, 12b) are arranged symmetrically with respect to a vertical plane passing through the theoretical axis of the shaft and that the position of the said bearing devices (7a, 7b) is adjusted taking into account the weight of the shaft (1), so that the application pressure onto the said bearing devices (7a, 7b), resulting from the warp (11) given to the axis of the shaft (1) in the opposite direction, is greater than the effects of the centrifugal force.

8. A supporting device according to one of the claims 4 to 7, characterised in that it comprises two intermediate supporting means (12a, 12b), spaced from one another, located respectively at equal distance from both centring devices (2a, 2b) of the ends of the shaft (1).

9. A supporting device according to one of the claims 4 to 8, characterised in that it is applied to a conveyor with parallel cylinders brought closer to one another in order to accommodate a more or less continuous bearing surface.

10. A supporting device according to claim 9, characterised in that each intermediate support (12) comprises a supporting part (13) of adjustable height carrying two bearing rollers (24, 25) mounted in rotation round axes (26, 27) parallel to the axis of the corresponding cylinder (1) and which are staggered longitudinally and transversally so that the rollers of two neighbouring supports are imbricated into one another.

11. A supporting device according to claim 10, characterised in that every second cylinder (1) is associated with at least an intermediate support (12) carrying two rollers (24, 25) staggered symmetrically on either sides of the axis of the associated cylinder (1b) and that the axes (26b, 27b) of the said rollers (24b, 25b) are placed in the vertical middle planes between the said cylinder (1b) and the adjacent cylinders (1a, 1c) so that each roller (24b) (25b) bears simultaneously on the associated cylinder (1b) and on the adjacent cylinder (1a) (1e) located on the same side.

Fig. 1

Fig. 2

Fig.3

Fig.4

Fig. 5

Fig.7

Fig.8

Fig.6

Fig.9

Fig.12

Fig.11

Fig.10